# EUROPEAN PATENT SPECIFICATION

(11) **EP 2 708 148 B1**
(45) Date of publication and mention of the grant of the patent: **10.08.2016**
(21) Application number: 12184466.6
(22) Date of filing: 14.09.2012
(51) Int. Cl.: A22C 9/00, A22C 17/00, A23B 4/28, A23L 3/3454, A23L 13/50, A23L 13/70

(54) **Inline meat treatment process**
Inline-Fleischbehandlungsverfahren
Procédé de traitement de viande en ligne

(43) Date of publication of application: 19.03.2014
(73) Proprietor: GEA Food Solutions Bakel B.V., 5761 EN Bakel (NL)
(72) Inventor: Poos, Willem, 5223 LG ´s-Hertogenbosch (NL); Barnacle, Stuart, Ipswich Suffolk, IP1 5QG (GB)
(74) Representative: Wolff, Felix

(56) References cited:
- EP-A1- 1 269 853
- US-A- 5 431 936
- US-A- 5 972 398
- US-A1- 2003 008 043
- US-A1- 2010 028 506

## Description

The present invention relates to a process for treating meat.

Meat treatment processes are well known from the state of the art, for example from US 5 431 936 A, US 2003/008043 A1 and US 2010/028506. In many cases such a process starts by injecting a brine or the like into the meat, for example with needles. This marinated meat is subsequently often tumbled in order to distribute the brine in the meat. However, tumbling often harms delicate meat products and/or the productivity of such a process is limited because tumbling is a batch-process.

It was therefore the objective of the present invention to provide a process that does not comprise the deficiencies according to the state of the art.

The problem is solved with an inline process for treating meat comprising the following steps:
- injection of a marinade into the meat,
- shaking of the meat, wherein during shaking the meat is driven in one direction, stopped and then reversed
- heat treatment of the meat.

The present invention relates to an inline process for treating meat, i.e. to a process that is carried out on a production line where the meat travels down a line, having one step after another done to it. The speed of the movement of the meat during its travel along the line can be altered or maintained constant.

The inventive concept has the advantage that no buffers, holding means or complex logistics are needed.

The meat that can be treated according to the inventive process can be any type of meat known by the person skilled in the art, for example pork, beef, lamb, poultry, particularly poultry with skin, preferably chicken wings and/or chicken legs and/or chicken breasts or fish.

According to the inventive process a marinade, for example a brine, is first of all injected into the meat. The marinade can be a watery solution which may comprise salt, spices, oil and/or vinegar. The injection is preferably carried out with an array of needles, which are inserted into the meat and the marinade is forced into the meat.

Subsequently, the meat is shaken. Shaken according to the present invention means that the meat is driven in at least one, preferably more directions, stopped and then reversed. The shaking is, for example caused by a vibration of a support, which carries the meat. Preferably, the motion of this support is chosen such, that the meat is not only shaken but also advanced in a certain direction. This support can be, for example a vibrating and/or oscillating table or a vibrating and/or oscillating belt. Preferably, the frequency, amplitude and/or the direction of the shaking is altered during the shaking step. Preferably, the orientation of the meat is altered during the shaking step. The meat is preferably flipped over during the shaking step, so that it is bared on different regions of its surface during the shaking. The shaking can be, for example, carried out by oscillating a transportation belt. In another preferred embodiment, the meat is put into a cage which is oscillated. The oscillation step can be a multistage process step, whereas in each stage the shaking parameters are at least partially different.

After the shaking, the meat is heat-treated. This heat treatment can be any heat treatment known to the person skilled in the art, for example frying, grilling or cooking, wherein cooking is preferred. The cooking is carried out with hot water, steam and/or with air and/or with heat transfer by radiation, conduction and/or natural or forced convection. The cooking can take place under a different pressure than ambient pressure.

According to a preferred embodiment, the inventive inline process comprises a holding step. However, this holding step is included in the line. Preferably, the meat is transported during the holding step. The holding step can be incorporated after the injection and prior to the shaking and/or after the shaking and prior to the heat treatment. Holding can be, for example, realized by additional transportation length and/or by an inline buffer.

In another preferred embodiment, the shaking and the transportation of the meat is carried out at least partially simultaneously. This saves line-length and process time. Preferably, the meat is supported on a surface, for example a table or a belt that carries out an approximately circular or ellipsoid movement. During this movement the meat is lifted from the surface and moved in one direction, while the surface moves, during the flight of the meat in the reverse direction. By this means, the meat is shaken and transported. Such devices are, for example so called vibrating table.

An unbalance motor (vibrator), for example, creates a circular movement of a table top which consequently vibrates in vertical and horizontal direction. A pendulum vibrator creates an almost linear (elliptical) movement of the table top. The direction of application of force is preferably variable adjustable. Hereby a specific transport effect on the table top can be achieved.

The inventive process has the following advantages:
- no buffers needed
- continuous supply of cooked products
- less logistical effort
- yield benefits compared to process without shaker
- better brine distribution
- protein activation
- protein extraction
- overall line yield improvement
- better product appearance after cooking, no visual injection marks (needle marks)
- better quality (blemish - less discoloration)

The invention is now explained according to figures 1 - 4. These explanations do not limit the scope of protection of the present invention.
Figures 1 - 3 each show different embodiments of the present invention.
Figure 4 shows an embodiment of the shaking step.

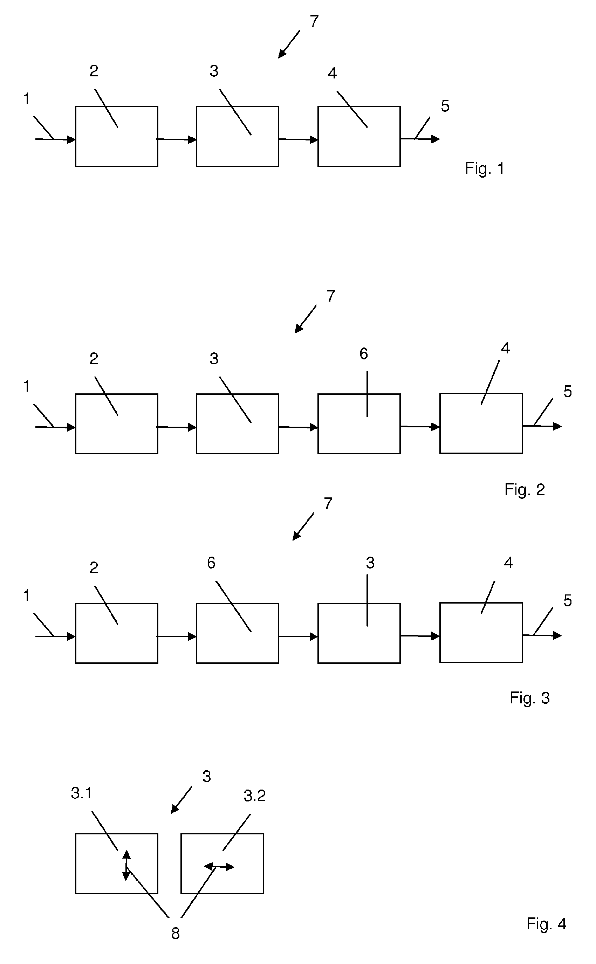

Figure 1 shows a first embodiment of the inventive process. In this figure, a meat treatment line 7 is depicted. The meat is fed via an infeed 1 to the treatment line 7 and a marinade is injected into the meat in the injection step 2. This injection can be, for example, carried out by an array of needles that penetrate the meat at different locations. The pressurized marinade exits the needle while it travels through the meat and migrates at least partially into the meat. Subsequently, the marinated meat is shaken, i.e. subjected to vibrations which have a certain frequency and a certain amplitude, whereas the frequency and/or the amplitude and/or the direction of the vibration can be altered during the shaking step. The shaking improves the distribution of the marinade in the meat and/or supports the closure of the holes left by the needles. It is also possible to improve the tenderness of the meat by the shaking. Subsequently, a heat treatment device 4 is provided inline, in which the meat is heat-treated, preferably cooked. Finally, the injected, shaken and cooked meat exits the line at the outlet 5. Since the inventive process is an inline-process, the meat automatically and preferably continuously moves from one treatment step to the next. This reduces the logistics and a continuous stream of finished products can be achieved. The meat need not be stored during the treatment.

Figure 2 shows another embodiment of the present invention. Essentially, reference can be made to figure 1 and the corresponding description. However, in the present case, a holding step 6 is included inline between the shaking step 3 and the heat treatment step 4. This holding step 6 can be realized, for example, by additional transportation lengths and/or by an inline buffer.

Figure 3 shows yet another embodiment of the present invention. Again reference can be made to figure 1 and the corresponding description and to figure 2 and its description. However, in the present case, a holding step is included inline between the injection step 2 and the shaking step 3. Regarding the embodiment of the holding step, reference is made to the disclosure according to figure 2.

Figure 4 shows an embodiment of the shaking step 3. In the present case, the shaking step comprises two stages in which the meat can be shaken separately and/or differently from each other. In the present case, the direction of the oscillation 8 differs. Both stages are arranged in the meat treatment line 7, whereas stage 3.1 is located upstream from stage 3.2.

### List of reference signs

- 1: infeed
- 2: injection
- 3: shaking
- 3.1: first stage
- 3.2: second stage
- 4: heat treatment, cooking
- 5: outfeed
- 6: holding, buffering, transporting
- 7: meat treatment line
- 8: direction of motion

## Claims

1. Inline process (7) for treating meat comprising the following steps:
- injection (2) of a marination-fluid into the meat,
- shaking (3) of the meat, wherein during shaking the meat is driven in one direction, stopped and then reversed,
- heat treatment (4) of the meat.

2. Inline process (7) according to claim 1, **characterized in that** the heat treatment (4) is cooking.

3. Inline process (7) according to one of the preceding claims, **characterized in that** meat with skin is treated.

4. Inline process (7) according to one of the preceding claims, **characterized in that** the shaking step (3) comprises multiple stages.

5. Inline process (7) according to one of the preceding claims, **characterized in that** during shaking, the meat is flipped over so that the meat is beared on different regions of its surface.

6. Inline process (7) according to one of the preceding claims, **characterized in that** the amplitude and/or the frequency changes during the shaking step.

7. Inline process (7) according to one of the preceding claims, **characterized in, that** the shaking and the transportation of the meat is carried out simultaneously.

8. Inline process (7) according to one of the preceding claims, **characterized in, that** the meat is supported on a surface and that this surface carries out an circular or ellipsoid movement.

## Patentansprüche

1. Inline-Verfahren (7) zum Behandeln von Fleisch, umfassend die folgenden Schritte:
- Einspritzen (2) einer Marinadeflüssigkeit in das Fleisch,
- Schütteln (3) des Fleischs, wobei während des Schüttelns das Fleisch in eine Richtung geführt, gestoppt und dann zurückgeführt wird,
- Wärmebehandlung (4) des Fleischs.

2. Inline-Verfahren (7) gemäß Anspruch 1, **dadurch gekennzeichnet, dass** die Wärmebehandlung (4) Kochen ist.

3. Inline-Verfahren (7) gemäß einem der vorstehenden Ansprüche, **dadurch gekennzeichnet, dass** Fleisch mit Haut behandelt wird.

4. Inline-Verfahren (7) gemäß einem der vorstehenden Ansprüche, **dadurch gekennzeichnet, dass** der Schritt des Schüttelns (3) mehrere Stufen umfasst.

5. Inline-Verfahren (7) gemäß einem der vorstehenden Ansprüche, **dadurch gekennzeichnet, dass** das Fleisch während des Schüttelns umgedreht wird, so dass das Fleisch auf verschiedenen Bereichen seiner Oberfläche getragen wird.

6. Inline-Verfahren (7) gemäß einem der vorstehenden Ansprüche, **dadurch gekennzeichnet, dass** sich die Amplitude und/oder die Frequenz während des Schritts des Schüttelns verändert.

7. Inline-Verfahren (7) gemäß einem der vorstehenden Ansprüche, **dadurch gekennzeichnet, dass** das Schütteln und die Beförderung des Fleischs gleichzeitig durchgeführt werden.

8. Inline-Verfahren (7) gemäß einem der vorstehenden Ansprüche, **dadurch gekennzeichnet, dass** das Fleisch auf einer Oberfläche getragen wird und dass diese Oberfläche eine kreisförmige oder ellipsoide Bewegung durchführt.

## Revendications

1. Procédé en ligne (7) pour le traitement de viande comprenant les étapes suivantes :
- injection (2) d'un fluide de marinage dans la viande,
- agitation (3) de la viande, la viande étant, lors de l'agitation, entraînée dans une direction, arrêtée puis entraînée dans la direction inverse,
- traitement thermique (4) de la viande.

2. Procédé en ligne (7) selon la revendication 1, **caractérisé en ce que** le traitement thermique (4) est une cuisson.

3. Procédé en ligne (7) selon l'une des revendications précédentes, **caractérisé en ce que** de la viande avec peau est traitée.

4. Procédé en ligne (7) selon l'une des revendications précédentes, **caractérisé en ce que** l'étape d'agitation (3) comprend de multiples phases.

5. Procédé en ligne (7) selon l'une des revendications précédentes, **caractérisé en ce que**, lors de l'agitation, la viande est retournée de telle sorte que la viande soit exposée au niveau de différentes régions de sa surface.

6. Procédé en ligne (7) selon l'une des revendications précédentes, **caractérisé en ce que** l'amplitude et/ou la fréquence changent au cours de l'étape d'agitation.

7. Procédé en ligne (7) selon l'une des revendications précédentes, **caractérisé en ce que** l'agitation et le transport de la viande sont effectués simultanément.

8. Procédé en ligne (7) selon l'une des revendications précédentes, **caractérisé en ce que** la viande est supportée sur une surface et **en ce que** cette surface décrit un mouvement circulaire ou elliptique.
